# FASCICULE DE BREVET EUROPEEN

(11) **EP 1 501 144 B1**
(45) Date de publication et mention de la délivrance du brevet: **14.11.2007**
(21) Numéro de dépôt: 04291841.7
(22) Date de dépôt: 19.07.2004
(51) Int. Cl.: H01M 8/02, H01M 8/04, H01M 8/24

(54) **Cellule de pile à combustible à forte surface active**
Brennstoffzelle mit hoher aktiver Oberfläche
Fuel cell with high active surface

(30) Priorité: 24.07.2003 FR 0309069
(43) Date de publication de la demande: 26.01.2005
(73) Titulaire: Peugeot Citroën Automobiles S.A., 78140 Vélizy Villacoublay (FR)
(72) Inventeur: Roy, Francis, 91940 Les Ulis (FR); Glipa, Xavier, 91440 Bures Sur Yvette (FR); Lee, Nicholas Robert Paul, 91430 Igny (FR)
(74) Mandataire: Thinat, Michel

(56) Documents cités:
- EP-A- 0 410 159
- EP-A- 0 446 680
- EP-A- 0 975 039
- WO-A-02/05374
- WO-A-02/41435
- DE-A- 4 120 359
- DE-A- 19 532 791
- DE-A- 19 630 004
- US-A- 5 064 734

## Description

L'invention concerne une pile à combustible et plus particulièrement une cellule de pile à combustible.

Une pile à combustible est un dispositif électrochimique qui permet de convertir l'énergie chimique en énergie électrique à partir d'un carburant, généralement l'hydrogène, et d'un comburant, l'oxygène ou un gaz contenant de l'oxygène tel que l'air, le seul produit de la réaction étant l'eau accompagné d'un dégagement de chaleur et d'une production d'électricité.

En effet, au sein de la pile à combustible, la réaction chimique globale résultant des réactions se produisant à l'anode et la cathode et sur lesquelles on reviendra plus tard est la suivante :

H₂+ ½ O₂ → H₂O

Une pile à combustible peut être utilisée pour fournir l'énergie électrique à tout dispositif tel que par exemple un ordinateur, un téléphone portable mais elle peut être également utilisée pour assurer la traction d'un véhicule automobile et/ou l'alimentation des dispositifs électriques contenus dans un véhicule.

Une pile à combustible peut être constituée d'une ou de plusieurs cellules.

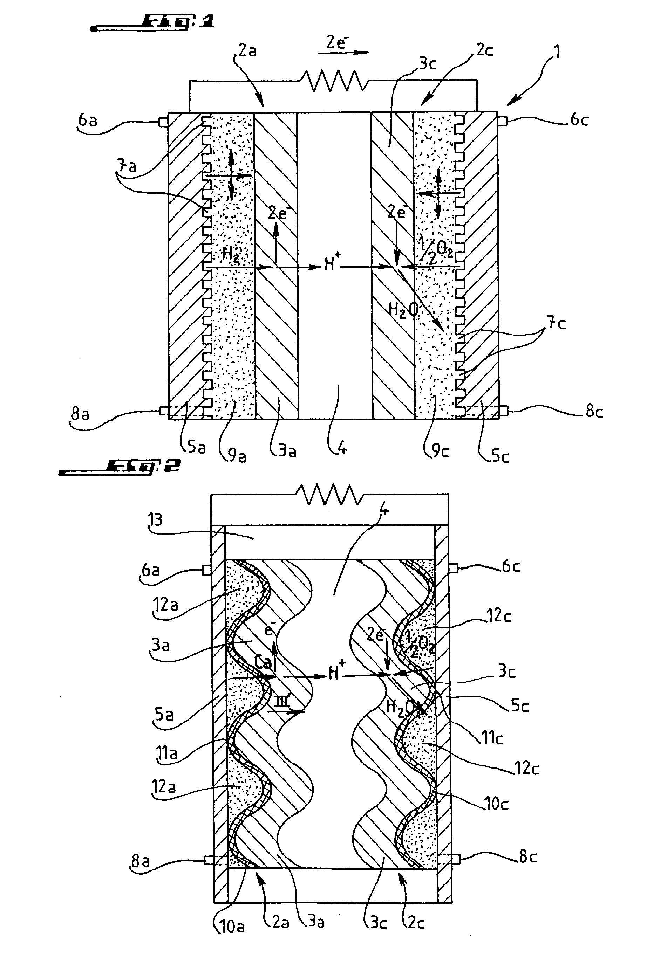

Pour décrire le principe de fonctionnement d'une pile à combustible de l'art antérieur, on se réfère à la figure 1 qui représente une coupe longitudinale d'une cellule d'une telle pile à combustible.

Comme une cellule d'une pile à combustible présente une symétrie de construction entre les compartiments anodique et cathodique, les éléments de ces deux parties qui ont la même fonction seront désignés, dans la description qui suit, par la même référence complétée, le cas échéant, par la lettre « a » pour les éléments relatifs au compartiment anodique et la lettre « c » pour les éléments relatifs au compartiment cathodique.

Une cellule de pile à combustible 1 comprend deux électrodes poreuses anodique 2a et cathodique 2c comprenant chacune une couche active 3a,3c qui sont le siège des réactions respectivement anodique et cathodique.

Les couches actives 3a et 3c sont de préférence réalisées en carbone poreux supportant un électrocatalyseur de platine.

Lorsque la couche active 3a de l'électrode anodique 2a est alimentée en hydrogène, la réaction qui se produit dans cette couche active 3a est la suivante :

H₂ → 2e⁻ + 2H⁺ (1)

Un électrolyte 4 est pris en sandwich entre les deux couches actives 3a et 3c et assure le transfert électronique de la couche active 3a vers la couche active 3c.

A cet effet, l'électrolyte peut être par exemple un électrolyte solide polymère, la pile résultante étant du type SPEFC (Solid Polymer Electrolyte Fuel Cell) ou plus particulièrement une membrane échangeuse de protons, la pile résultante étant une pile de type PEMFC (Proton Exchange Membrane Fuel Cell), ce dernier type de pile à combustible étant particulièrement intéressant pour la traction automobile à condition que l'on garantisse à la membrane une certaine humidité.

Dans le cas d'une pile PEMFC, la membrane peut être réalisée à base de polymères perfluorosulfonés.

La couche active 3c est alimentée en oxygène et la réaction qui se produit au niveau de cette couche active 3c est la suivante :

½ O₂ + 2H⁺ + 2e⁻ → H₂O (2)

Chaque électrode poreuse anodique 2a et cathodique 2c comprend également une couche de diffusion respective 9a,9c qui est intercalée entre la couche active 3a, 3c et une plaque bipolaire 5a, 5c.

Les plaques bipolaires 5a, 5c sont réalisées en un matériau électriquement conducteur par exemple en métal, en graphite ou en composite polymère + graphite.

Ces plaques bipolaires 5a et 5c assurent notamment la collecte du courant résultant des réactions anodique et cathodique qui se produisent dans les couches actives 3a et 3c.

A cet effet et pour assurer la collecte du courant par les plaques bipolaires 5a,5c, les couches de diffusion 9a, 9c sont réalisées en un matériau électriquement conducteur et sont en contact avec les couches actives 3a,3c et les plaques bipolaires 5a,5c.

Le courant produit dans la cellule et collecté par les plaques bipolaires 5a,5c permet alors d'alimenter tout système nécessitant une telle alimentation.

Pour assurer le bon fonctionnement de la pile, le carburant doit atteindre la couche active 3a de l'électrode anodique 2a et le comburant doit atteindre la couche active 3c de l'électrode anodique 2c.

L'alimentation en carburant du coté anodique et en comburant du coté cathodique est un impératif de fonctionnement de la pile mais joue également un rôle en ce qui concerne ses performances.

En effet, on comprend que les performances de la pile dépendent des réactions qui se produisent à l'anode et à la cathode elles-mêmes dépendantes de l'alimentation en carburant et en comburant des couches actives respectives 3a et 3c.

Dans la pile de l'art antérieur de la figure 1, la distribution en carburant, par exemple l'hydrogène, au niveau de l'électrode poreuse anodique 2a et la distribution de l'oxygène au niveau de l'électrode poreuse cathodique 2c sont assurées par les plaques bipolaires 5a et 5c au moyen d'une entrée de gaz respectivement 6a et 6c qui traverse la plaque correspondante 5a, 5c et d'une sortie de gaz respectivement 8a et 8c qui traverse également la plaque correspondante 5a, 5c mais aussi au moyen de canaux de distribution 7a,7b qui sont usinés dans les plaques bipolaires respectives 5a et 5c ou mis en forme par embouttissage d'une plaque métallique.

L'hydrogène et l'oxygène circulent ainsi dans les canaux de distribution respectifs 7a et 7c et se répandent dans les électrodes respectivement anodique 2a et cathodique 2c jusqu'aux couches actives anodique 3a et cathodique 3c.

Afin d'assurer une distribution homogène des gaz sur une surface maximum des couches actives 3a et 3b, les électrodes anodique 2a et cathodique 2c du dispositif de l'art antérieur doivent ainsi comporter chacune la couche de diffusion respectivement 9a et 9c qui est intercalée entre la plaque bipolaire 5a,5c et la couche active correspondante 2a,2c.

Dans ces conditions, les couches de diffusion 9a et 9c sont également réalisées en un matériau poreux tel que du tissu de carbone par exemple.

Ainsi, du coté anodique par exemple, l'hydrogène circule dans les canaux de distribution 7a vers la couche active 3a en traversant la couche de diffusion 9a, comme illustré par des flèches sur la figure 1, le même phénomène de diffusion de l'oxygène se produisant du coté cathodique.

Selon une autre cellule de pile à combustible également connue et non représentée, les couches de diffusion 9a,9c sont absentes et les gaz circulant dans les canaux de distribution 7a,7b atteignent la couche active respective 3a,3c uniquement au niveau de la surface de la couche active 3a,3c située en regard des canaux de distribution 7a,7b.

Au contraire, dans la cellule représentée sur la figure 1, l'hydrogène atteint alors de façon plus homogène toute la surface de la couche active 3a en contact avec la couche de diffusion 9a et de la même façon, l'oxygène atteint de façon plus homogène toute la surface de la couche active 3c en contact avec la couche de diffusion 9c, ce qui favorise les réactions dans les couches actives 3a,3c et augmente ainsi les performances de la pile par rapport à une pile ne comportant pas de couche de diffusion 9a,9a.

En outre, un système de distribution de fluide de refroidissement permettant de compenser le dégagement de chaleur résultant des réactions dans la pile peut être inséré dans la plaque bipolaire cathodique 5c par exemple.

Cependant, la pile à combustible représentée sur la figure 1 présente les inconvénients suivants.

L'usinage des canaux de distribution des gaz dans les plaques bipolaires 5a, 5c est une contrainte importante puisque d'une part, les opérations d'usinage de ces canaux dans les plaques bipolaires 5a,5c sont longues, délicates, complexes et coûteuses et d'autre part, elles imposent une épaisseur minimum aux plaques bipolaires, ce qui entraîne un encombrement et un poids excessif de la pile lorsqu'elle comprend plusieurs cellules.

Les publications EP 410 159, DE 4 120 359, EP 446 680, US 5 064 734, DE 195 32 791, DE 196 30 004 et WO 02/41435 décrivent des piles à combustible à électrodes planaires comportant un collecteur de courant intercalé entre au moins une électrode et la plaque bipolaire correspondante.

Dans ce contexte, l'invention vise une pile à combustible permettant de pallier les inconvénients précités et présentant en outre des performances accrues en matière de production énergétique.

A cet effet, la cellule de pile à combustible de l'invention comprend un électrolyte (4) pris en sandwich entre deux couches actives respectivement anodique (3a) et cathodique (3c) qui sont chacune reliées électriquement à une plaque bipolaire respective anodique (5a) et cathodique (5c), et dans laquelle le carburant et le comburant sont amenés au moins au niveau de la surface interne des plaques bipolaires respectives anodique (5a) et cathodique (5c) et est essentiellement caractérisée en ce que la couche active anodique (3a) repose sur toute la surface d'une couche poreuse anodique électriquement conductrice (10a) intercalée entre cette couche active anodique (3a) et la plaque bipolaire anodique (5a) en formant au moins une cavité (12a) qui assure la distribution du carburant dans la couche active anodique (3a) et en ce que la couche active cathodique (5b) repose sur toute la surface d'une couche poreuse cathodique électriquement conductrice (10c) intercalée entre cette couche active cathodique (3c) et la plaque bipolaire cathodique (5c) en formant au moins une cavité (12c) qui assure la distribution du comburant dans la couche active cathodique (3c).

Ainsi, dans la pile de l'invention, il n'est pas nécessaire de réaliser des canaux de distribution dans les plaques bipolaires 5a et 5c, puisque ce sont les cavités 12a, 12c qui font office de canaux de distribution.

Aussi, grâce à cette configuration, la surface active de la pile est fortement augmentée et ses performances le sont également.

Avantageusement, les couches actives anodique 3a et cathodique 3c reposent respectivement sur les couches poreuses anodique 10a et cathodique 10c.

De préférence, les couches poreuses 10a,10c sont des grilles métalliques 10a,10c.

En outre, les grilles métalliques (10a,10c) peuvent présenter, en section transversale perpendiculaire aux plaques bipolaires 5a,5c, une forme ondulée constituant une première ondulation.

Avantageusement, les grilles métalliques 10a,10c comportent, en section transversale perpendiculaire aux plaques bipolaires 5a,5c suivant la direction longitudinale de la première ondulation, au moins une deuxième ondulation.

De préférence, la première ondulation des grilles métalliques 10a,10c est de type sinusoïdale.

Selon l'invention, le carburant peut être l'hydrogène, par exemple issu du reformage d'hydrocarbures, mais il est également possible, de façon avantageuse, que le carburant soit un mélange d'eau et de méthanol.

Préférentiellement, le comburant est l'oxygène.

Il est également possible que la comburant soit de l'air.

L'électrolyte de la cellule de la pile de l'invention peut être un polymère.

L'électrolyte de la cellule de la pile de l'invention peut également être une membrane échangeuse d'ions.

Les couches actives 3a,3b sont constituées, par exemple, de carbone poreux supportant un électrocatalyseur de platine.

En outre, la cellule de pile à combustible comprend un circuit de refroidissement dans la plaque bipolaire cathodique 5c.

De préférence, les couches poreuses 10a,10c, les couches actives 3a,3c et l'électrolyte 4 sont encapsulées dans un boîtier isolant et hermétique 13.

L'invention concerne également une pile à combustible comprenant au moins une cellule comme définie précédemment.

Cette pile à combustible peut être avantageusement utilisée pour assurer la traction d'un véhicule automobile et/ou l'alimentation des dispositifs électriques contenus dans ce véhicule.

Cette pile à combustible peut également être avantageusement utilisée pour des applications stationnaires et/ou des dispositifs mobiles.

L'invention sera mieux comprise et d'autres buts, avantages et caractéristiques de celle-ci apparaîtront plus clairement à la lecture de la description qui suit et qui est notamment faite au regard des dessins annexés et sur lesquels :
- la figure 1 est une coupe longitudinale d'une cellule de pile à combustible de l'art antérieur ;
- la figure 2 est une coupe longitudinale d'une cellule de pile à combustible de l'invention selon un premier mode de réalisation;
- la figure 3 représente une vue en perspective du compartiment cathodique d'une cellule de la pile de l'invention suivant la flèche III de la figure 2 ; et
- la figure 4 représente une vue en perspective identique à celle de la figure 3 d'une partie de la partie cathodique de la pile à combustible de l'invention selon un second mode de réalisation.

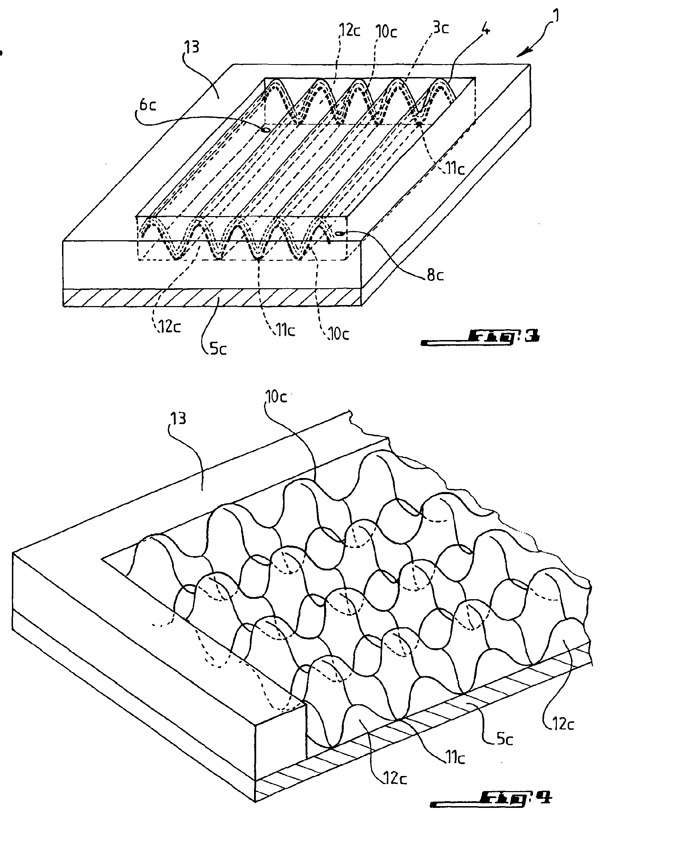

Les éléments ayant la même fonction dans la pile de l'art antérieur représentée sur la figure 1 et dans la pile de l'invention représentée sur les figures 2 à 4 porteront les mêmes références dans la description qui suit.

On se réfère d'abord aux figures 2 et 3 pour décrire la cellule de la pile à combustible de l'invention selon un premier mode de réalisation.

Cette cellule comprend un électrolyte 4, des électrodes poreuses anodique 2a et cathodique 2a intercalées entre les plaques bipolaires 5a et 5c. Les électrodes poreuses 2a, 2c comprennent chacune une couche active 3a, 3c entre lesquelles l'électrolyte 4 est pris en sandwich.

Une grille métallique 10a, 10c est disposée entre la plaque bipolaire 5a,5c et la couche active 3a,3c.

Cette grille métallique 10a,10c présente en section transversale perpendiculaire aux plaques bipolaires 5a,5c, une forme ondulée constituant une première ondulation en formant des cavités 12a,12c entre la plaque bipolaire 5a,5c et la grille 10a,10c.

La couche active 3a,3c repose sur toute la surface de la grille métallique 10a et 10c et présente ainsi une ondulation imposée par cette grille 10a,10c.

De la même façon, l'électrolyte 4 qui est pris en sandwich entre les deux couches actives 3a et 3c présente également une ondulation imposée par la géométrie ondulée des grilles métalliques 10a et 10c puisqu'il est préférable que l'électrolyte soit en contact avec toute la surface des couches actives 3a et 3c pour assurer au mieux le transfert électronique.

Dans ce premier mode de réalisation, l'ondulation de la grille métallique 10a,10c est de préférence type sinusoïdale sur toute sa longueur.

La grille métallique 10a, 10c présente des points de contact 11a, 11c avec la plaque bipolaire correspondante 5a,5c, ce qui permet à ces plaques 5a et 5c d'assurer leur fonction de collecteur de courant.

Dans la pile de l'invention, le carburant Ca et le comburant, l'oxygène, sont introduits au niveau des électrodes anodique 2a et cathodique 2c par des entrées de gaz 6a,6c qui traversent les plaques bipolaires respectives 5a,5c.

Le gaz introduit pénètre alors dans les cavités 12a,12c et peut circuler d'une cavité à l'autre en traversant la grille métallique 10a,10c et la couche active 3a,3c grâce à la porosité des grilles métalliques 10a et 10c et des couches actives 3a et 3c.

Des sorties de gaz 8a,8c traversant les plaques bipolaires 5a,5c sont également prévues.

Le gaz présent dans les cavités 12a,12c traverse la grille métallique 10a,10c et atteint de façon homogène toute la surface de la couche active 3a,3c au sein de laquelle il pénètre.

Les cavités 12a,12c font ainsi office de canaux de distribution de gaz.

Il se produit alors les réactions à l'anode et à la cathode ainsi que le transfert électronique tel qu'il a été décrit dans ce dispositif de l'art antérieur représenté en figure 1.

De préférence, les électrodes poreuses 2a et 2c et l'électrolyte 4 sont encapsulés dans un boîtier isolant et hermétique 13 comme illustré sur la figure 3.

Ainsi, la configuration de la grille métallique 10a,10c, sa nature poreuse et la présence des cavités 12a,12c résultant de la configuration de la grille, permettent d'assurer la distribution homogène des gaz dans les couches actives 3a,3c.

De plus, la surface de ces couches actives 3a,3c est considérablement augmentée par rapport à la pile de l'art antérieur grâce à leur configuration ondulée puisque ces couches actives 3a, 3c reposent sur les grilles métalliques respectives 10a, 10c qui sont elles-mêmes ondulées.

Toute autre configuration de la grille métallique 10a,10c dans la pile de l'invention est possible à condition que le contact électrique entre la grille métallique 10a,10c et les plaques bipolaires 3a,3c soit établi et que le gaz puisse circuler dans les cavités 12a,12c et atteindre une surface maximum de la couche active 3a,3c.

Par exemple, comme représenté sur la figure 4, la grille métallique 10a, 10c peut prendre une configuration du type 'boîte à oeuf', c'est à dire présentant une première ondulation identique à celle de la grille métallique 10a,10c de la pile représentée en figures 2 et 3 et une deuxième ondulation en section transversale perpendiculaire aux plaques bipolaires 5a,5c suivant la direction longitudinale de la première ondulation sinusoïdale.

Dans ce mode de réalisation, la surface de la couche active 3a,3c sera fortement augmentée par rapport à celle de la cellule représentée en figure 2.

On comprend ainsi que plus les grilles métalliques 10a et 10c présentent des repliements ou ondulations, plus les surfaces actives 3a,3c correspondantes augmentent et plus la performance de la pile est également accrue.

Selon l'invention, la grille métallique 10a,10c peut être remplacée par n'importe quelle couche poreuse réalisée en un matériau électriquement conducteur, à la fois suffisamment souple pour être repliée mais également suffisamment solide pour supporter les couches actives 3a, 3c et l'électrolyte 4.

Dans la pile de l'invention, l'absence des canaux de distribution de gaz 7a,7c dans les plaques bipolaires 5a,5c est très avantageuse tant au niveau du coût de fabrication des plaques bipolaires que pour l'encombrement et le coût de la pile qui sont réduits.

Aussi, comme les couches de diffusion 9a, 9c de la pile de l'art antérieur sont remplacées par les grilles métalliques 10a, 10c, il en résulte également un abaissement du coût de fabrication par rapport à la pile de l'art antérieur.

En ce qui concerne le carburant, il est possible d'utiliser de l'hydrogène pour alimenter l'anode, mais pour s'affranchir des contraintes liées au reformage et/ou au stockage de l'hydrogène, il est avantageusement possible d'alimenter directement l'anode de la pile avec un mélange d'eau et de méthanol (pile de type DMFC).

Dans ce cas, la réaction se produisant à l'anode est la suivante :

CH₃OH + H₂O 6H⁺ + 6e⁻ + CO₂

Enfin, comme expliqué précédemment, la pile de l'invention présente avantageusement une surface de couches actives 3a, 3c accrue par rapport à la pile de l'art antérieur et donc une performance de fonctionnement également plus importante.

## Revendications

1. Cellule de pile à combustible qui comprend un électrolyte (4) pris en sandwich entre deux couches actives respectivement anodique (3a) et cathodique (3c) qui sont chacune reliées électriquement à une plaque bipolaire respective anodique (5a) et cathodique (5c), et dans laquelle le carburant et le comburant sont amenés au moins au niveau de la surface interne des plaques bipolaires respectives anodique (5a) et cathodique (5b), **caractérisée en ce que** la couche active anodique (3a) repose sur toute la surface d'une couche poreuse anodique électriquement conductrice (10a) intercalée entre cette couche active anodique (3a) et la plaque bipolaire anodique (5a) en formant au moins une cavité (12a) qui assure la distribution du carburant dans la couche active anodique (3a) et **en ce que** la couche active cathodique (5b) repose sur toute la surface d'une couche poreuse cathodique électriquement conductrice (10c) intercalée entre cette couche active cathodique (3c) et la plaque bipolaire cathodique (5c) en formant au moins une cavité (12c) qui assure la distribution du comburant dans la couche active cathodique (3c).

2. Cellule de pile à combustible selon la revendication 1, **caractérisée en ce que** les couches poreuses (10a,10c) sont des grilles métalliques (10a,10c).

3. Cellule de pile à combustible selon la revendication 2, **caractérisée en ce que** les grilles métalliques (10a,10c) présentent, en section transversale perpendiculaire aux plaques bipolaires (5a,5c), une forme ondulée constituant une première ondulation.

4. Cellule de pile à combustible selon la revendication 3, **caractérisée en ce** les grilles métalliques (10a,10c) comportent, en section transversale perpendiculaire aux plaques bipolaires (5a,5c) suivant la direction longitudinale de la première ondulation, au moins une deuxième ondulation.

5. Cellule de pile à combustible selon la revendication 3 ou 4, **caractérisée en ce que** la première ondulation des grilles métalliques (10a,10c) est de type sinusoïdale.

6. Cellule de pile à combustible selon l'une quelconque des revendications précédentes, **caractérisée en ce que** le carburant est l'hydrogène.

7. Cellule de pile à combustible selon la revendication 6, **caractérisé en ce que** l'hydrogène est produit à partir de reformage d'hydrocarbures.

8. Cellule à pile combustible selon l'une quelconque des revendications 1 à 5, **caractérisé en ce que** le carburant est un mélange d'eau et de méthanol.

9. Cellule de pile à combustible selon l'une quelconque des revendications précédentes, **caractérisée en ce que** le comburant est l'oxygène.

10. Cellule de pile à combustible selon l'une quelconque des revendications 1 à 8, **caractérisée en ce que** le comburant est l'air.

11. Cellule de pile à combustible selon l'une quelconque des revendications précédentes, **caractérisée en ce que** l'électrolyte est un polymère.

12. Cellule de pile à combustible selon l'une quelconque des revendications 1 à 10, **caractérisée en ce que** l'électrolyte est une membrane échangeuse d'ions.

13. Cellule de pile à combustible selon l'une quelconque des revendications précédentes, **caractérisée en ce que** les couches actives 3a,3b sont constituées par du carbone poreux supportant un électrocatalyseur de platine.

14. Cellule de pile à combustible selon l'une quelconque des revendications précédentes, **caractérisée en ce qu'**elle comprend en outre un circuit de refroidissement dans la plaque bipolaire cathodique (5c).

15. Cellule de pile à combustible selon l'une quelconque des revendications précédentes, **caractérisée en ce que** les couches poreuses (10a,10c), les couches actives (3a,3c) et l'électrolyte (4) sont encapsulés dans un boîtier isolant et hermétique (13).

16. Pile à combustible comprenant au moins une cellule selon l'une des revendications précédentes.

17. Pile à combustible selon la revendication 16 utilisée pour assurer la traction d'un véhicule automobile et/ou l'alimentation des dispositifs électriques contenue dans ce véhicule.

18. Pile à combustible selon la revendication 16, utilisée pour des applications stationnaires et/ou des dispositifs mobiles.

## Claims

1. Fuel cell comprising an electrolyte (4) sandwiched between two active layers, anode (3a) and cathode (3c), respectively, each of which are electrically connected to an anode (5a) and cathode (5c) bipolar plate, and wherein the fuel and the oxidizing agent are brought at least to the level of the inner surface of the anode (5a) and cathode (5c) bipolar plates, respectively, **characterized in that** the anode active layer (3a) rests on the entire surface of an electrically conductive porous anode layer (10a) inserted between this anode active layer (3a) and the anode bipolar plate (5a) while forming at least one cavity (12a) which ensure distribution of the fuel in the anode active layer (3a) *and* **in that** that cathode active layer (5b) rests on the entire surface of an electrically conductive porous cathode layer (10c) inserted between this cathode active layer (3c) and the cathode bipolar plate (5c) while forming at least one cavity (12c) which ensure distribution of the oxidizing agent in the cathode active layer (3c).

2. Fuel cell according to claim 1, **characterized in that** the porous layers (10a, 10c) are metal grids (10a, 10c).

3. Fuel cell according to claim 2, **characterized in that** the metal grids (10a, 10c) have, in transverse cross-section perpendicular to the bipolar plates (5a, 5c), a wave shape forming a first wave.

4. Fuel cell according to claim 3, **characterized in that** the metal grids (10a, 10c) comprise, in transverse cross-section perpendicular to the bipolar plates (5a, 5c) following the longitudinal direction of the first wave, at least one second wave.

5. Fuel cell according to claim 3 or 4, **characterized in that** the first wave of the metal grids (10a, 10c) is of the sinusoidal type.

6. Fuel cell according to any of the preceding claims, **characterized in that** the fuel is hydrogen.

7. Fuel cell according to claim 6, **characterized in that** the hydrogen is produced from hydrocarbon reforming.

8. Fuel cell according to any of claims 1 to 5, **characterized in that** the fuel is a mixture of water and methanol.

9. Fuel cell according to any of the preceding claims, **characterized in that** the oxidizing agent is oxygen.

10. Fuel cell according to any of claims 1 to 8, **characterized in that** the oxidizing agent is air.

11. Fuel cell according to any of the preceding claims, **characterized in that** the electrolyte is a polymer.

12. Fuel cell according to any of claims 1 to 10, **characterized in that** the electrolyte is an ion exchange membrane.

13. Fuel cell according to any of the preceding claims, **characterized in that** the active layers 3a, 3b are made up of porous carbon supporting a platinum electrocatalyst.

14. Fuel cell according to any of the preceding claims, **characterized in that** it also comprises a cooling circuit in the cathode bipolar plate (5c).

15. Fuel cell according to any of the preceding claims, **characterized in that** the porous layers (10a, 10c), the active layers (3a, 3c) and the electrolyte (4) are encapsulated in an insulating and leak-proof box (13).

16. Fuel cell comprising at least one cell according to one of the preceding claims.

17. Fuel cell according to claim 16 used to ensure traction of a motor vehicle and/or powering of electrical devices contained in said vehicle.

18. Fuel cell according to claim 16, used for stationary applications and/or moving devices.

## Patentansprüche

1. Brennstoffzelle, die ein Elektrolyt (4) zwischen zwei aktiven jeweils anodischen (3a) und kathodischen (3c) Schichten umfasst, die beide elektrisch mit einer bipolaren jeweils anodischen (5a) und kathodischen (5c) Platte verbunden sind, und in der der Kraftstoff und der Oxydator mindestens auf die Ebene der internen Oberfläche der bipolaren jeweils anodischen (5a) und kathodischen (5b) Platten geführt werden, **dadurch gekennzeichnet, dass** die aktive anodische Schicht (3a) über die gesamte Oberfläche auf einer porösen anodischen elektrisch leitfähigen Schicht (10a) aufliegt, die zwischen dieser aktiven anodischen Schicht (3a) und der anodischen bipolaren Platte (5a) liegt, mindestens einen Hohlraum (12a) ausbildend, der die Verteilung des Kraftstoffs in der aktiven anodischen Schicht (3a) gewährleistet, und **dadurch**, dass die aktive kathodische Schicht (5b) über die gesamte Oberfläche auf einer porösen kathodischen elektrisch leitfähigen Schicht (10c) aufliegt, die zwischen dieser aktiven kathodischen Schicht (3c) und der kathodischen bipolaren Platte (5c) liegt, mindestens einen Hohlraum (12c) ausbildend, der die Verteilung des Oxydators in der aktiven kathodischen Schicht (3c) gewährleistet.

2. Brennstoffzelle nach Anspruch 1, **dadurch gekennzeichnet, dass** die porösen Schichten (10a, 10c) Metallgitter (10a, 10c) sind.

3. Brennstoffzelle nach Anspruch 2, **dadurch gekennzeichnet, dass** die Metallgitter (10a, 10c) im Querschnitt senkrecht zu den bipolaren Platten (5a, 5c) eine Wellenform aufweisen, die eine erste Welligkeit darstellen.

4. Brennstoffzelle nach Anspruch 3, **dadurch gekennzeichnet, dass** die Metallgitter (10a, 10c) im Querschnitt senkrecht zu den bipolaren Platten (5a, 5c) in Längsrichtung der ersten Welligkeit mindestens eine zweite Welligkeit umfassen.

5. Brennstoffzelle nach Anspruch 3 oder 4, **dadurch gekennzeichnet, dass** die erste Welligkeit der Metallgitter (10a, 10c) sinuskurvenförmig ist.

6. Brennstoffzelle nach einem der vorangehenden Ansprüche, **dadurch gekennzeichnet, dass** der Kraftstoff Wasserstoff ist.

7. Brennstoffzelle nach Anspruch 6, **dadurch gekennzeichnet, dass** der Wasserstoff durch Kohlenwasserstoff-Reforming gewonnen wird.

8. Brennstoffzelle nach einem der Ansprüche 1 bis 5, **dadurch gekennzeichnet, dass** der Kraftstoff ein Wasser-Methanol-Gemisch ist

9. Brennstoffzelle nach einem der vorangehenden Ansprüche, **dadurch gekennzeichnet, dass** der Oxydator Sauerstoff ist.

10. Brennstoffzelle nach einem der Ansprüche 1 bis 8, **dadurch gekennzeichnet, dass** der Oxydator Luft ist.

11. Brennstoffzelle nach einem der vorangehenden Ansprüche, **dadurch gekennzeichnet, dass** der Elektrolyt ein Polymer ist.

12. Brennstoffzelle nach einem der Ansprüche 1 bis 10, **dadurch gekennzeichnet, dass** der Elektrolyt eine Ionenaustauschermembran ist.

13. Brennstoffzelle nach einem der vorangehenden Ansprüche, **dadurch gekennzeichnet, dass** die aktiven Schichten 3a, 3b von porösem Karbon gebildet werden, einen Platin-Elektrokatalysator tragend.

14. Brennstoffzelle nach einem der vorangehenden Ansprüche, **dadurch gekennzeichnet, dass** sie weiterhin einen Kühlkreislauf in der bipolaren kathodischen Platte (5c) umfasst.

15. Brennstoffzelle nach einem der vorangehenden Ansprüche, **dadurch gekennzeichnet, dass** die porösen Schichten (10a, 10b), die aktiven Schichten (3a, 3c) und der Elektrolyt (4) in einem isolierenden und hermetischen Behälter (13) eingekapselt sind.

16. Brennstoffzelle, mindestens eine Zelle nach einem der vorangehenden Ansprüche umfassend.

17. Brennstoffzelle nach Anspruch 16, die dazu verwendet wird, um den Antrieb eines Kraftfahrzeugs und/oder die Versorgung der in diesem Fahrzeug vorhandenen elektrischen Vorrichtungen zu gewährleisten.

18. Brennstoffzelle nach Anspruch 16, die für stationäre Anwendungen und/oder mobile Vorrichtungen verwendet wird.
